# EUROPEAN PATENT APPLICATION

(11) **EP 3 054 425 A1**
(43) Date of publication of application: **10.08.2016**
(21) Application number: 16152141.4
(22) Date of filing: 20.01.2016
(51) Int. Cl.: G06T 17/00

(54) **DEVICES AND METHODS FOR RENDERING GRAPHICS DATA**

(30) Priority: 05.02.2015 US 201514614747
(71) Applicant: BlackBerry Limited, Waterloo, ON N2K 0A7 (CA)
(72) Inventor: DROZDYUK, Yury George, Richmond Hill, Ontario L4E 0J5 (CA)
(74) Representative: Moore, Barry

(57) **Abstract**

Methods and devices to enable rendering of graphics data on a computing device having a native rendering engine. The computing device determines the graphics format that is most desirable in light of the nature of the native rendering engine on the device. In some cases, in selecting the most desirable graphics format the device may also assess the nature of the graphics operations likely to be performed on the graphics data, if any. The request to the remote device, such as a server, includes information indicating the target format for the graphics data. The server provides the graphics data in the target format. If the graphics data is not already in the target format the server converts the data to the target format before sending to the computing device. It then stores the converted data to have it available for subsequent requests from the computing device or other computing devices.

## Description

### FIELD

The present application generally relates to rendering graphics data.

### BACKGROUND

Graphics data may come in a number of formats, including 2D (two-dimensional) and 3D (three-dimensional) formats. 2D vector graphics data is defined in terms of lines and polygons. 3D graphics data is typically defined in terms of triangles.

Modern mobile devices typically include a hardware-based or software-based graphics rendering engine to speed the rendering and manipulation of graphics. In most modern mobile devices, the native rendering engine is a 3D renderer. To use a 3D renderer for rendering 2D vector graphics data, the mobile device's processor must convert the 2D vector graphics data to 3D graphics.

### SUMMARY

Accordingly there is provided methods, computing devices, systems and computer programs as detailed in the claims that follow.

### BRIEF DESCRIPTION OF THE DRAWINGS

Reference will now be made, by way of example, to the accompanying drawings which show example embodiments of the present application, and in which:
Figure 1 shows one embodiment of an example system;
Figure 2 shows, in flowchart form, an example process for enabling the fast rendering of graphics data by a computing device; and
Figure 3 shows, in flowchart form, an example process for enabling the fast rendering of map data by a computing device.

Similar reference numerals may have been used in different figures to denote similar components.

### DESCRIPTION OF EXAMPLE EMBODIMENTS

In a first aspect, the present application describes a method of enabling rendering of graphics data on a computing device having a native rendering engine. The method includes receiving, at a remote device, from the computing device, a request for graphics data, the graphics data being in an original graphics format different from the format of the native rendering engine, the request indicating a target graphics format corresponding to the native rendering engine on the computing device; converting, by the remote device, the graphics data from the original graphics format to the target graphics format; storing a copy of the graphics data in the target graphics format; and, sending the computing device, in reply to the request, the graphics data in the target graphics format for rendering on the computing device.

In another aspect, the present application describes a method of enabling fast rendering of graphics data on a computing device having a native rendering engine, the graphics data being located at a remote device, such as a server. The method includes receiving a request for the graphics data; determining a target graphics format based upon the native rendering engine on the computing device; sending, to the remote server, a request identifying the graphics data and the target graphics format; receiving, from the remote server, in reply to the request, the graphics data in the target graphics format; and rendering the graphics data on a display of the computing device.

In yet another aspect, the present application describes a first computing device to enable rendering of graphics data on a second computing device having a native rendering engine. The first computing device may be a server in some cases. The server includes a processor; data storage containing the graphics data; and a request handler to receive, from the second computing device, a request for the graphics data, the graphics data being in an original graphics format different from the format of the native rendering engine, the request indicating a target graphics format corresponding to the native rendering engine on the second computing device. The request handler is to convert the graphics data from the original graphics format to the target graphics format, store a copy of the graphics data in the target graphics format in the data storage, and send the second computing device, in reply to the request, the graphics data in the target graphics format for rendering on the second computing device.

In yet another aspect, the present application describes a computing device for rendering graphics data obtained from a remote device, such as a server, for example. The computing device includes a display; a processor; a native rendering engine to render graphical elements in a particular graphics format for output to the display; and a graphics data retrieval process executed by the processor to receive a request for the graphics data, determine a target graphics format based upon the native rendering engine on the computing device, send, to the remote server, a request identifying the graphics data and the target graphics format, and receive, from the remote server, in reply to the request, the graphics data in the target graphics format.

In yet a further aspect, the present application describes computer-readable media storing computer-executable program instructions which, when executed, configured a processor to perform the described methods.

Other aspects and features of the present application will be understood by those of ordinary skill in the art from a review of the following description of examples in conjunction with the accompanying figures.

In the present application, the term "and/or" is intended to cover all possible combination and sub-combinations of the listed elements, including any one of the listed elements alone, any sub-combination, or all of the elements, and without necessarily excluding additional elements.

In the present application, the phrase "at least one of ...or..." is intended to cover any one or more of the listed elements, including any one of the listed elements alone, any sub-combination, or all of the elements, without necessarily excluding any additional elements, and without necessarily requiring all of the elements.

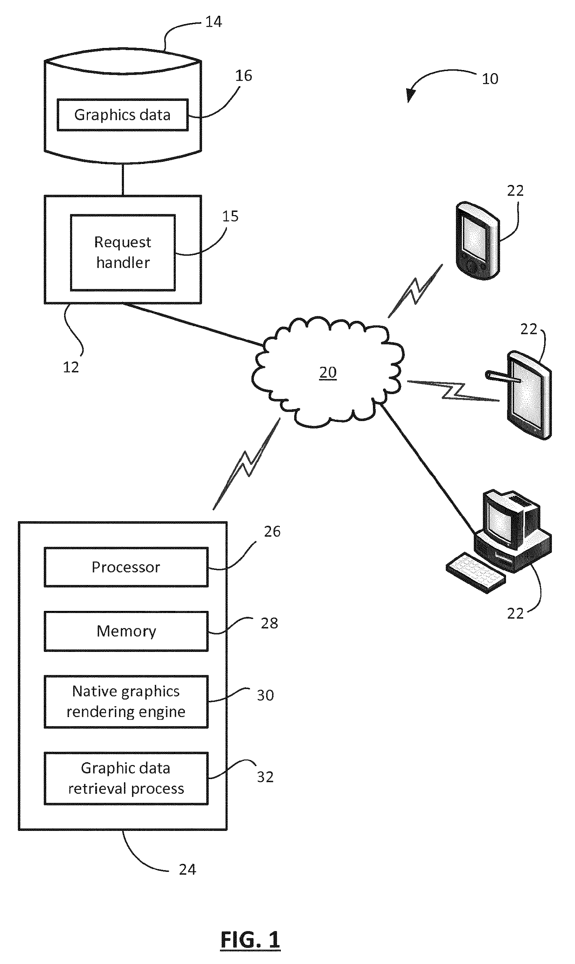

Reference is first made to Figure 1, which shows an example system 10 that includes a remote device, such as a computing device. In this example, the remote computing device is a server 12. The server 12 includes a data storage element 14 containing graphics data 16. The server 12 is accessible via a data network 20. The server 12 includes a request handler 15 for receiving requests for the graphics data 16, obtaining the requested data from the data storage element 14 and transmitting the graphics data 16 in reply to the request. The network 20 may include multiple interconnected networks, including wired and wireless networks. The network 20 may include the Internet. A plurality of client devices 22 may connect to the network 20 via wired or wireless communications interfaces.

In one example, one of the client devices is a mobile device 22. The mobile device 22 includes a processor 26, memory 28, and a native graphics rendering engine 30. Although references herein to the processor 26 are singular, it will be understood that the processor 26 may include a plurality of processors, and may include one or more multi-core processors. Other elements of the mobile device 22 not explicitly illustrated may include one or more communications subsystems to enable the mobile device 22 to connect to various networks or other devices for wired or wireless communications, a display screen, speaker, touch screen overlay for receiving gesture-based inputs, buttons, keys, cameras, microphones, or other sensors or I/O devices.

The native graphics rendering engine 30 is for accelerated graphics processing. In some cases, the native graphics rendering engine 30 may be dedicated hardware element, such as a graphics processing unit. In some other cases, the native graphics rendering engine 30 may be software-implemented and operating on the processor 26, such as the OpenGL API. In many cases, the native graphics rendering engine 30 is a highly-parallelized processing element, whether in hardware or software, specifically designed to carry out the computations necessary to calculate output values to drive a display to render the graphics data. In many embodiments the native graphics rendering engine 30 is specifically designed to render graphics data of a particular format. For example, the engine 30 may be designed to render data in a 3D format, or to render 2D vector data graphics. In some cases, the engine 30 may be designed to be particularly efficient in certain graphics rendering operations, such as texture application, and may be less efficient at other graphics rendering operations, depending on the specific engine.

The mobile device 22 may include a graphics data retrieval process 32, which may be embodied in software stored in the memory 28 and executable by the processor 26 to cause the processor 26 or other elements of the mobile device 22 to carry out the operations of the graphics data retrieval process 32. It will be understood that the present application describes and labels the graphics data retrieval process 32 as an independently identifiable element of the mobile device 22 for ease of illustration, but that the process may be embedded or implemented within other software, such as, for example, a browser application, operating system software, a mapping application, a gaming application, an application programming interface, or other software construct.

The mobile device 22 is configured to access the network 20 for data communications, including the retrieval of data from remote servers. For example, a browser operating on the mobile device 22 may request a webpage (e.g. an HTML or other mark-up language document, together with images, videos, graphics or other data to be rendered in the webpage. In another example, a specific application, such as a gaming application, operating on the mobile device 22 may request graphics data from a remote server in connection with a game. In yet another example, a mapping application may request map graphics data from a remote server. Other examples will be familiar to those ordinarily skilled in the art.

Graphics data received by the mobile device 22 is rendered on the display. In some cases, the graphics data may be rendered using the native graphics rendering engine 30, if the graphics data obtained from a remote server is in the correct format to be rendered by the native graphics rendering engine 30. In some other cases, it is not in the correct format. This means that the mobile device 22 likely needs to convert the graphics to the correct format, using the processor 26, in order to send it to the native graphics rendering engine 30 for rendering on the display. In some cases, the mobile device 22 may decide to render the graphics without using the native graphics rendering engine 30, again using the processor 26. In either case, a computational burden is placed on the processor 26 that may slow other operations of the device and may unnecessarily drain battery resources.

In some cases, the conversion of the graphics to the correct format for rendering by the native graphics rendering engine 30 is unavoidable since the content is dynamic and will be change frequently. In other cases, the graphics data may be relatively static. In some cases, the static data may be used in a situation in which it is likely to undergo particular graphics manipulation operations, such as scaling, panning, or rotating operations, for example. In the case of such operations, it would be advantageous to have the graphics data in a format for rendering in which such operations are relatively easy to carry out efficiently.

In accordance with one aspect of the present application, when the graphics data retrieval process 32 is tasked with obtaining graphics data from a remote server, it determines a target format for the graphics data. The determination may be based on a number of factors. First, the determination may be based, at least in part, upon the graphics format used or preferred by the native graphics rendering engine 30. In one embodiment, the determination may be wholly based upon the format used or preferred by the native graphics rendering engine 30.

In another example, the determination of the target format may further be based, in part, upon whether the graphics data is to be used in an application involving particular graphics manipulation operations. In other words, whether the application requesting the graphics may be expected to later apply zoom, pan, and/or rotate operations to the graphics data. For example, the processor 26 or the native graphics rendering engine 30 may be adept at handling such graphics manipulation operations in a particular format (which may or may correspond to the primary format used or preferred by the native graphics rendering engine 30) so it may select that particular format as the target format in order to make subsequent manipulations easier or faster.

In yet another example, the determination of the target format may be based, in part, upon the relative power requirements of using the processor 26 versus the native graphics rendering engine 30, and the current power level of the computing device 24. For example, if the current power level of the computing device 24, *e.g.* the battery charge, is low then the computing device 24 may select the target format based on which format will result in the lowest power consumption. In many implementations, the lowest power option may correspond to use of the preferred format for the native graphics rendering engine 30. In some cases, however, the native graphics rendering engine 30 may be focused on speed and may have greater power consumption than performing rendering of another format directly by the processor 26 at a slower speed. Accordingly, in such a case the computing device 24 may select the target format for rendering directly by the processor 26. In some cases, the type of operations likely to be applied may also be a factor insofar as they may cause greater power consumption as manipulations require frequent rendering operations and calculations. In such circumstances, the computing device 24 may select the format that can be manipulated by the processor 26 or native graphics rendering engine 30, as the case may be, most power efficiently.

Once the graphics data retrieval process 32 has determined the target format, it sends a request for the graphics data to a remote server, such as server 12, together with information indicating the target format. The server 12 receives the request and the indication of the target format and retrieves the requested graphics data, such as the graphics data 16, from the data storage element 14. It assesses whether the requested graphics data 16 is available in the target format. If so, it responds to the request by sending the graphics data 16 to the mobile device 24. If not, then the server 12 converts the graphics data 16 to the correct format, stores a copy in the data storage element 14, and sends the converted graphics data to the mobile device 24.

It will be appreciated that although the above example describes the mobile device 24, in other examples the mobile device may be a computing device of another type, including a personal computer, tablet, laptop, or other computing device. Likewise, in some other embodiments, the server 12 may be a computing device such as a mobile device, smartphone, personal computer, tablet, laptop, or other computing device.

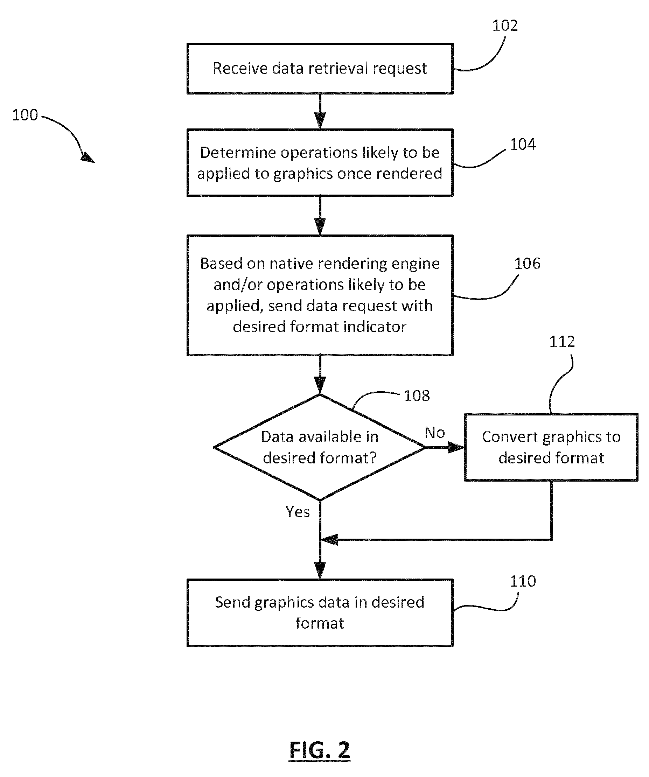

Reference is now made to Figure 2, which shows, in flowchart form, an example process 100 for enabling fast rendering of graphics data on a computing device. The computing device has a native graphics rendering engine which is designed for rending graphics of a particular format. In some cases, the engine may be designed to be adept at handling particular graphics manipulation operations in a given graphics format.

In operation 102, the computing device receives a data retrieval request. The data retrieval request is for graphics data stored at a remote location. The request may include the graphical elements, file name(s), URI, or other information specifying the requested graphics data and the remote location. The request may occur as a result of a user input selecting a link in a browser corresponding to a web page containing graphics data stored at a remote location, a user input within an application having a graphical user interface that uses graphics data from a remote location, an application-generated request for graphics data stored at a remote location, or in any other manner.

The computing device may determine the graphical operations that will be applicable to the graphics data when rendered, as indicated by operation 104. In one embodiment, the determination of the likely operations or manipulations that will be applied may be based on the type of application. In terms of likely graphics operations, as an example, an image or photo rendering application may be expected to apply scaling, panning, cropping, rotating and other graphics manipulation operations. A mapping application or a mapping function within an application may be expected to apply scaling and panning operations. A gaming application may involve fast graphics manipulation of visual graphics elements. As another example, a browser rendering webpages may not be expected to involve graphics operations in the normal course. It will be understood that graphics operations may occur in such a case, such as a change in the zoom level used in the browser application which causes a scaling of the web page content; however, it may be that this type of graphical operation is somewhat infrequent and is not anticipated to occur as an integral part of viewing the webpage.

In operation 106, the computing device determines a target format for the requested graphics data. The determination of the target format may be based upon the native graphics rendering engine. For example, if the native graphics rendering engine is configured to render 3D graphics, then the computing device may select 3D graphics format as the target graphics format. In some cases, the types of graphics operations likely to be applied to the graphics data may assist in determining the target format. For example, if the native graphics rendering engine is configured to implement certain operations, e.g. pan, rotate and zoom, efficiently in 2D vector graphics format, then the computing device may select that as the target graphics format if those operations are likely to be required.

The computing device then sends a data retrieval request to a remote server during operation 106. The data retrieval request includes information indicating the target data format.

At the remote server, in operation 108, the data storage medium is checked to determine whether the requested graphics data is available in the target format. If so, then in operation 110 the server sends the requested graphics data to the computing device. If not, then in operation 112 the remote server converts the requested graphics data to the target format. It then forwards the converted graphics data to the computing device in the target format. Accordingly, the computing device receives the graphics data in the target format and is able to use the native graphics rendering engine to render the graphics data on the display without requiring a complex conversion process by the processor. Having the graphics data in the target format may also facility easy graphics manipulation operations via the native graphics rendering engine.

In at least one embodiment, the described operations of the process 100 are performed "automatically" by the computing device and/or server, as the case may be. The term "automatically" as used herein is meant to indicate that the operations are performed in response to settings, signals or computer instructions without the necessity of user input. For example, in an embodiment involving automatic operations, the determination of a target format for graphics data in operation 106 is not based on user selection of a target format; rather, it is based on the device selection of a target format in accordance with logic rules for selecting a target format for a particular set of circumstances.

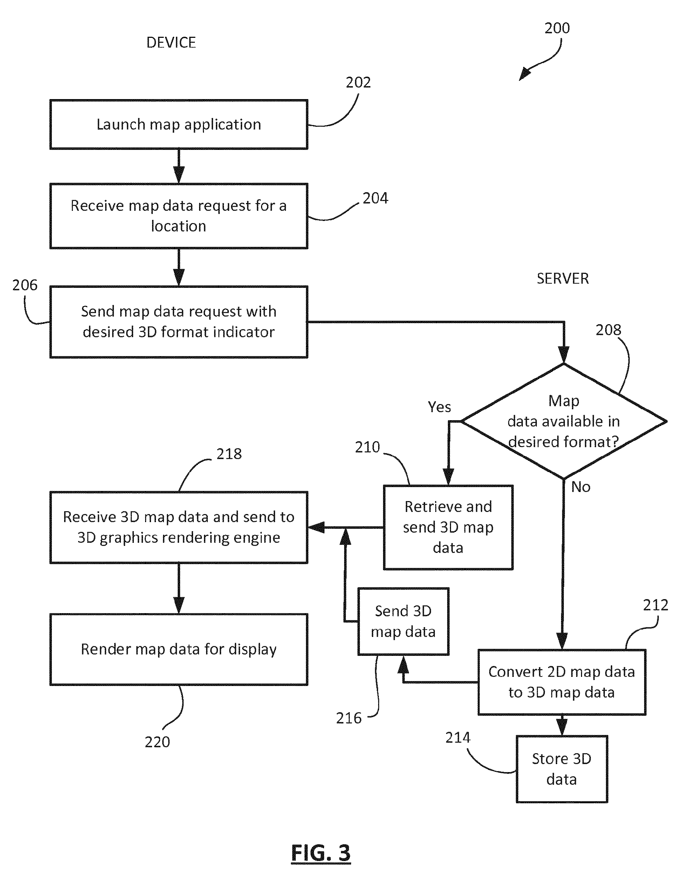

Reference is now made to Figure 3, which shows another example process 200 for enabling fast rendering of graphics data on a computing device. In this example, the graphics data relates to map information to be rendered by a map application. The map application may be a stand-alone map application or may be embedded within another application, such as, for example, a real-estate listings application. The map data resides on a remote server accessible to the computing device over a network connection. In this example, the map application is originally created and stored at the server in 2D vector format. The computing device includes a native 3D rendering pipeline. Accordingly, to render the map data quickly and efficiently, and to perform subsequent pan, zoom, and other graphics operations on the rendered map data, the computing device would prefer to receive map data in 3D graphics format so that it can use its native 3D rendering pipeline.

Operation 202 indicates launch of the map application on the computing device. The computing device receives a request for map data corresponding to a particular location in operation 204. In one example, the request may be generated by the map application based upon GPS location data generated by a GPS chip in the computing device that identifies the device's current location. In another example, the request may be generated by the map application based upon user entered address information. In yet a further example, the request may be generated by the map application based upon user selection of a hyper-linked address or other location data in another application.

In operation 206, the computing device sends the map data request to the remote server. The request includes target format information, which in this example is 3D graphics format.

At the server, in operation 208, the server's data storage is searched for the requested map data. The server assesses whether it has that map data in 3D format. If so, then in operation 210 it sends the 3D format map data to the computing device. If it does not have the requested map data in the target 3D format, then in operation 212 the server converts the requested data from 2D vector format map data to 3D format data. It stores the converted data locally in operation 214, in case any computing device subsequently requests the same data in that format, and it sends the converted 3D map data to the computing device in operation 216.

The computing device receives the 3D format map data in operation 218 and provides it to the 3D graphics rendering pipeline, which then renders the map data for display in operation 220.

Although not shown, the remote server may include a plurality of remote servers. Some servers may be proxy servers. Some servers may be caching servers having associated data storage caches with copies of graphics data in various graphics formats as those formats are requested from time-to-time. In response to a request for particular graphics data in a specific graphics format a caching server may first look for the requested data locally and, if not available, pass the request to one or more other servers that may have the requested data in the target format.

The processes 100 and 200 described above may be applied to a variety of types of graphics. As one example, they may be applied to map data. As another example, they may be applied to a 2D graphics format such as an SVG (Scalar Vector Graphics) image which may be embedded in an HTML page. As another example, they may be applied to Flash which uses 2D graphics.

It will be appreciated that the methods and systems according to the present application may be implemented using one or more of a number of computing devices having one or more processors. The methods may be implemented by way of software containing instructions for configuring a processor or processors to carry out the functions described herein. The software instructions may be stored on any suitable computer-readable memory, including CDs, RAM, ROM, Flash memory, etc.

It will be understood that the variable speed limit system described herein and the module, routine, process, thread, or other software component implementing the described method/process may be realized using standard computer programming techniques and languages. The present application is not limited to particular processors, computer languages, computer programming conventions, data structures, or other such implementation details. Those skilled in the art will recognize that the described processes may be implemented as a part of computer-executable code stored in volatile or non-volatile memory, as part of an application-specific integrated chip (ASIC), etc.

Certain adaptations and modifications of the described embodiments can be made. Therefore, the above discussed embodiments are considered to be illustrative and not restrictive.

## Claims

1. A method of enabling rendering of graphics data on a computing device having a native rendering engine, the method comprising:
receiving, at a remote device, from the computing device, a request for graphics data, the graphics data being in an original graphics format different from a format of the native rendering engine, the request indicating a target graphics format corresponding to the native rendering engine on the computing device;
converting, by the remote device, the graphics data from the original graphics format to the target graphics format;
storing a copy of the graphics data in the target graphics format; and,
sending the computing device, in reply to the request, the graphics data in the target graphics format for rendering on the computing device.

2. The method claimed in claim 1, wherein the original graphics format is 2D and the target graphics format is 3D.

3. The method claimed in claim 2, wherein the native rendering engine on the computing device comprises a 3D renderer.

4. The method claimed in any preceding claim, further comprising, on the computing device, determining one or more graphical operations that will be applicable to the graphics data once rendered and selecting the target graphics format based upon the one or more graphical operations and the native rendering engine.

5. The method claimed in claim 4, wherein the one or more graphical operations comprise at least one of pan, zoom, or rotate; and wherein the native rendering engine is a 3D renderer, the target graphics format is 3D, and the original graphics format is 2D.

6. A method of enabling rendering of graphics data on a computing device having a native rendering engine, the graphics data being located at a remote device, the method comprising:
receiving a request for the graphics data;
determining a target graphics format based upon the native rendering engine on the computing device;
sending, to the remote device, a request identifying the graphics data and the target graphics format;
receiving, from the remote device, in reply to the request, the graphics data in the target graphics format; and
rendering the graphics data on a display of the computing device.

7. The method claimed in claim 6, wherein the target graphics format is 3D, and wherein the native rendering engine on the computing device comprises a 3D renderer.

8. The method claimed in claim 6 or 7, wherein determining the target graphics format includes determining one or more graphical operations that will be applicable to the graphics data once rendered and selecting the target graphics format based upon the one or more graphical operations and the native rendering engine.

9. The method claimed in any one of claims 6 to 8, wherein the one or more graphical operations comprise at least one of pan, zoom, or rotate, the native rendering engine is a 3D renderer, and the target graphics format is 3D.

10. The method claimed in any preceding claim, wherein the graphics data comprises map data.

11. A first computing device to enable rendering of graphics data on a second computing device having a native rendering engine, the first computing device comprising:
a processor;
data storage containing the graphics data; and
a request handler, the request handler being configured to carry out the method of any one of claims 1 to 5.

12. A system comprising the first computing device claimed in claim 11, and further comprising the second computing device, wherein the second computing device includes a processor to determine one or more graphical operations that will be applicable to the graphics data once rendered and to select the target graphics format based upon the one or more graphical operations and the native rendering engine.

13. A computing device for rendering graphics data obtained from a remote device, the computing device comprising:
a display;
a processor;
a native rendering engine to render graphical elements in a particular graphics format for output to the display; and
a graphics data retrieval process executed by the processor to carry out the method of any one of claims 6 to 10.

14. A computer program which when executed on a computing device is configured to carry out the method of any one of claims 1 to 10.
